# EUROPÄISCHE PATENTSCHRIFT

(11) **EP 1 013 965 B1**
(45) Veröffentlichungstag und Bekanntmachung des Hinweises auf die Patenterteilung: **27.05.2009**
(21) Anmeldenummer: 99125458.2
(22) Anmeldetag: 21.12.1999
(51) Int. Cl.: F16H 3/00, F16H 3/093

(54) **Zahnräderwechselgetriebe mit zwei im Kraftfluss parallel zueinander angeordneten Teilgetrieben**
Toothed speed-changing gearing with two parallel transmission paths
Boîte de vitesses à engrenages avec division de puissance

(30) Priorität: 24.12.1998 DE 19860251; 20.05.1999 DE 19923185
(43) Veröffentlichungstag der Anmeldung: 28.06.2000
(60) Teilanmeldung: 03019572.1
(73) Patentinhaber: Daimler AG, 70327 Stuttgart (DE)
(72) Erfinder: Heinzel, Markus, 73079 Donzdorf (DE); Sperber, Ralf, 73240 Wendlingen (DE); Wörner, Günter, 71394 Kernen (DE)
(74) Vertreter: JENSEN & SON

(56) Entgegenhaltungen:
- EP-A- 0 969 225
- DE-A- 3 546 454
- DE-C- 720 884
- JP-A- 3 096 760
- US-A- 4 461 188
- US-A- 4 777 837
- US-A- 4 823 628

## Beschreibung

Die Erfindung betrifft ein zahnräderwechselgetriebe mit zwei im Kraftfluß parallel zueinander angeordneten Teilgetrieben nach dem Oberbegriff des Anspruchs 1.

Aus der JP 03 096760 A ist ein Zahnräderwechselgetriebe mit der Merkmalen des Oberbegriffes des Anspruchs 1 bekannt.

Die in Kraftfahrzeugen vorherrschenden Handschaltgetriebe mit einer Reibkupplung sind einfach und robust, haben jedoch den Nachteil, daß während des Gangwechsels eine Zugkraftunterbrechung auftritt. Konventionelle Automatikgetriebe mit einem hydrodynamischen Wandler vermeiden zwar eine Zugkraftunterbrechung während des Gangwechsels, besitzen jedoch aufgrund des Wandlers einen schlechteren Wirkungsgrad als Handschaltgetriebe. Ferner besitzen sie ein höheres Gewicht und sind kostenintensiver.

Bei Zahnräderwechselgetrieben mit zwei reibschlüssigen Lastschaltkupplungen und zwei im Kraftfluß parallel zueinander angeordneten Teilgetrieben können Gangwechsel unter Last durchgeführt werden, und zwar mit einer Überschneidungssteuerung der Lastschaltkupplungen. Damit können kostengünstige Automatikgetriebe mit einem guten Wirkungsgrad erreicht werden. In der Regel sind die geraden Getriebegänge dem einen Teilgetriebe und die ungeraden Getriebegänge dem anderen Teilgetriebe zugeordnet, so daß sequentiell unter Last geschaltet werden kann, jedoch nicht ohne weiteres einzelne Getriebegänge übersprungen werden können, sogenanntes Doppelhochschalten bzw. Doppelrückschalten.

Aus der US 4,461,188 ist bereits ein Zahnräderwechselgetriebe bekannt, bei dem eine Eingangswelle mit einem Differentialgetriebe durch ein erstes und ein zweites Teilgetriebe verbunden ist. Die beiden Teilgetriebe sind im Kraftfluß parallel zueinander angeordnet und weisen je eine reibschlüssige Lastschaltkupplung und je eine zwischenwelle auf. Diese Lastschaltkupplungen und Zwischenwellen sind zueinander konzentrisch und koaxial zur Eingangswelle angeordnet. Die Zwischenwellen sind über die jeweilige Lastschaltkupplung mit der Eingangswelle wirkungsmäßig verbindbar. Die Zwischenwelle sind mit zwei parallel zu diesen angeordneten Abtriebswellen wirkungsmäßig verbindbar. Diese Abtriebswellen treiben über eine Zahnradstufe auf das Differentialgetriebe ab.

Ferner ist aus der US 4,658,663 ein Zahnräderwechselgetriebe bekannt, bei dem eine Eingangswelle mit einer Ausgangswelle durch ein erstes und ein zweites Teilgetriebe verbunden ist, die im Kraftfluß parallel zueinander angeordnet sind und je eine reibschlüssige Lastschaltkupplung aufweisen. Mit den Lastschaltkupplungen sind konzentrisch zueinander angeordnete Zwischenwellen der Teilgetriebe mit der Eingangswelle verbindbar. Die Zwischenwellen sind über Getriebekonstanten, über eine gemeinsame, parallel zur Eingangswelle angeordnete Vorgelegewelle und über Zahnradpaare mit der Ausgangswelle wirkungsmäßig verbindbar. Die Zahnradpaare für die Vorwärtsgetriebegänge I, III, und IV sowie das Zahnradpaar für den Rückwärtsgetriebegang gehören dem ersten Teilgetriebe an. Der vierte Getriebegang ist als direkter Getriebegang ausgelegt und kann durch Einrücken eines Schaltelements zwischen der Ausgangswelle und der Zwischenwelle des ersten Teilgetriebes geschaltet werden.

Dem zweiten Teilgetriebe gehören die Zahnradpaare der Vorwärtsgetriebegänge II und V sowie ein zusätzliches Zahnradpaar an, deren Übersetzung gleich der Übersetzung des dritten Getriebegangs ist, dessen Zahnradpaar dem ersten Teilgetriebe angehört. Im ersten Teilgetriebe ist eine Zahnradkupplung für den dritten Getriebegang und die Direktkupplung für den vierten Getriebegang zu einer Wechselkupplung mit einer gemeinsamen Schaltschiebemuffe zusammengefaßt, welche mit einem Losrad des Zahnradpaars für den dritten Getriebegang oder mit der Ausgangswelle kuppelbar ist.

Zwar sind ohne Unterbrechung der Drehmomentübertragung bei dem Zahnräderwechselgetriebe alle Doppelrückschaltungen und Doppelhochschaltungen möglich, jedoch erfordern die Schaltungen vom direkten vierten Getriebegang zum ersten und dritten Getriebegang, deren zahnradpaare ebenfalls dem ersten Teilgetriebe angehören, die zwischenzeitliche Einschaltung des zusätzlichen Zahnradpaars des dritten Getriebegangs. Ferner sind insgesamt sieben Zahnradpaare entlang der gemeinsamen Vorgelegewelle angeordnet, wodurch das Zahnräderwechselgetriebe relativ lang baut. Zum Anfahren aus dem ersten Getriebegang wird stets die erste Lastschaltkupplung des ersten Teilgetriebes genutzt, wodurch an dieser gegenüber der zweiten Lastschaltkupplung ein erhöhter Verschleiß auftritt.

Der Erfindung liegt die Aufgabe zugrunde, ein Zahnräderwechselgetriebe mit geringem Bauaufwand und insbesondere mit geringer Baulänge, niedrigem Gewicht und mit einem hohen Wirkungsgrad zu entwickeln. Sie wird gemäß der Erfindung durch die Merkmale des unabhängigen Anspruchs 1 gelöst. Weitere Ausgestaltungen ergeben sich aus den Unteransprüchen.

Die Erfindung geht aus von einem Zahnräderwechselgetriebe, bei dem eine Eingangswelle mit einem Differentialgetriebe durch ein erstes und ein zweites Teilgetriebe verbunden ist, die im Kraftfluß parallel zueinander angeordnet sind. Jedes Teilgetriebe besitzt eine reibschlüssige Lastschaltkupplung und eine Zwischenwelle, die zueinander konzentrisch und koaxial zur Eingangswelle angeordnet sind, wobei jeweils die Zwischenwelle über die Lastschaltkupplung mit der Eingangswelle wirkungsmäßig verbindbar ist. Jede Zwischenwelle besitzt zumindest ein Zahnrad. Zumindest eine Zwischenwelle ist mit einer zu den Zwischenwellen parallel angeordneten Abtriebswelle wirkungsmäßig verbindbar, die direkt oder indirekt auf das Differentialgetriebe abtreibt, beispielsweise indirekt über eine zusätzliche Welle, Seitenwelle bzw. Seitenstufe usw. Besonders vorteilhaft treibt die Abtriebswelle jedoch direkt auf ein Zahnrad des Differentialgetriebes, wodurch Bauraum eingespart und über wenige Zahnradeingriffe mit hohem Wirkungsgrad abgetrieben werden kann. Das Differentialgetriebe kann als separates Getriebe gestaltet sein oder ist ein integrierter Bestandteil. Parallel zur ersten Abtriebswelle ist zumindest eine zweite Abtriebswelle angeordnet, die zu den Zwischenwellen und/oder zu dem Differentialgetriebe einen von der ersten Abtriebswelle abweichenden Achsenabstand aufweist. Zumindest ein Zahnrad wenigstens einer Zwischenwelle kämmt sowohl mit einem Zahnrad auf der ersten Abtriebswelle als auch mit einem Zahnrad auf der zweiten Abtriebswelle. Der erste und der zweite Getriebegang sind auf einer gemeinsamen Abtriebswelle angeordnet. Somit kann beim Gangwechsel vom ersten in den zweiten Getriebegang über die gleiche Abtriebswelle abgetrieben werden. Ein Wechsel der Abtriebswellen kann vermieden und dadurch der Komfort für den meist unter hoher Last stattfindenden Gangwechsel vom ersten in den zweiten Getriebegang gesteigert werden.

Zumindest ein Zahnrad und vorteilhaft mehrere Zahnräder auf einer oder vorteilhaft auf beiden Zwischenwellen können zwei Getriebegängen zugeordnet werden. Bei mehr als zwei Abtriebswellen können die Zahnräder auch mehr als zwei Getriebegängen zugeordnet werden. Es können bei einer kurzen Baulänge mit wenigen Zahnradebenen besonders viele Lastschaltmöglichkeiten und insbesondere sequentielle Schaltungen und zumindest die wichtigsten Doppelhoch- und Doppelrückschaltungen unter Last ohne zusätzliche Zahnradebenen erreicht werden. Bauraum, Gewicht und Kosten können reduziert und der Wirkungsgrad kann gesteigert werden. Aufgrund der erreichbaren kurzen Baulänge, eignet sich das erfindungsgemäße Zahnräderwechselgetriebe besonders für den Quereinbau in einem frontangetriebenen Kraftfahrzeug. Grundsätzlich ist es jedoch auch für einen Längseinbau in einem Kraftfahrzeug geeignet.

In einer vorteilhaften Ausgestaltung für einen breiten Anwendungsbereich ist eine Zahnradebene mit drei Zahnrädern dem zweiten und vierten Getriebegang und eine Zahnradebene dem dritten und sechsten Getriebegang zugeordnet. Die Achsenabstände der Abtriebswellen zu den Zwischenwellen bzw. zu dem Differentialgetriebe und deren Verhältnis wird bestimmt durch einen Stufensprung vom zweiten zum vierten Getriebegang, der dem Stufensprung vom dritten zum sechsten Getriebegang entspricht. Die Achsenabstände können jedoch grundsätzlich auch nach anderen Stufensprüngen ausgerichtet werden, beispielsweise nach dem Stufensprung vom ersten auf den zweiten Getriebegang, vom zweiten auf den dritten Getriebegang usw. Bei der Ausgestaltung ist vorteilhaft eine Abtriebswelle dem vierten, dem fünften und dem sechsten Getriebegang und eine Abtriebswelle dem ersten, dem zweiten und dem dritten Getriebegang sowie dem Rückwärtsgetriebegang zugeordnet, wobei die Zahnradebene für den dritten und sechsten Getriebegang, eine Zahnradebene für den ersten Getriebegang und eine Zahnradebene für den vierten Getriebegang jeweils ein Zahnrad auf der einen Zwischenwelle und die Zahnradebene für den zweiten und vierten Getriebegang, eine Zahnradebene für den fünften Getriebegang und eine Zahnradebene für den Rückwärtsgetriebegang jeweils ein Zahnrad auf der anderen Zwischenwelle aufweisen.

Um weiteren axialen Bauraum einzusparen, wird vorgeschlagen, auf jeder Zwischenwelle höchstens zwei Zahnräder anzuordnen. Vorteilhaft ist dabei eine Abtriebswelle dem zweiten, dem dritten, dem fünften Getriebegang und dem Rückwärtsgetriebegang und eine Abtriebswelle dem ersten, dem vierten und dem sechsten Getriebegang zugeordnet, wobei die zahnradebene für den dritten und sechsten Getriebegang und eine Zahnradebene für den Rückwärtsgetriebegang und den ersten Getriebegang jeweils ein Zahnrad auf der einen Zwischenwelle und die Zahnradebene für den zweiten und vierten Getriebegang und eine Zahnradebene für den fünften Getriebegang jeweils ein Zahnrad auf der anderen zwischenwelle aufweisen.

Ferner wird vorgeschlagen, daß zumindest ein Zahnrad auf wenigstens einer Zwischenwelle mit der ersten und der zweiten Lastschaltkupplung in Wirkverbindung bringbar ist. Es können mit wenigen Zahnradebenen besonders viele Lastschaltmöglichkeiten und insbesondere sequentielle Schaltungen und die wichtigsten Doppelhoch- und Doppelrückschaltungen unter Last ohne zusätzliche Zahnradebenen erreicht werden. Bauraum, Gewicht und Kosten können reduziert und der Wirkungsgrad kann gesteigert werden.

Die Ausgestaltung nach Anspruch 7 trägt dazu bei, die Lastschaltmöglichkeiten und den Wirkungsgrad zu erhöhen, zahnradebenen und Bauraum einzusparen und insbesondere neben einem sequentiellen Schalten unter Last Doppelhochschaltungen und Doppelrückschaltungen unter Last zu ermöglichen.

Es kann mit verschiedenen, dem Fachmann als geeignet erscheinenden konstruktiven Lösungen erreicht werden, daß zumindest ein Zahnrad auf einer Zwischenwelle mit der ersten und der zweiten Lastschaltkupplung in Wirkverbindung bringbar ist. Besonders vorteilhaft ist eine Zwischenwelle über ein oder mehrere Schaltelemente mit der anderen Zwischenwelle direkt oder indirekt in Wirkverbindung bringbar. Es können mehrere Zahnräder durch ein oder zumindest durch wenige Schaltelemente mit beiden Lastschaltkupplungen wirkungsmäßig verbunden werden.

Ist zumindest das dem ersten Getriebegang zugeordnete Zahnrad mit der ersten und der zweiten Lastschaltkupplung in Wirkverbindung bringbar, können vorteilhaft wahlweise die erste, die zweite oder beide Lastschaltkupplungen zum Anfahren genutzt werden. Die sich aus dem Anfahrvorgang ergebende Belastung kann auf beide Lastschaltkupplungen verteilt werden. Eine überhöhte Temperatur kann trotz kostengünstiger Dimensionierung der Lastschaltkupplungen vermieden, der Verschleiß reduziert und die Wartungsintervalle können verlängert werden. Ferner kann bei Ausfall einer Lastschaltkupplung die zweite Lastschaltkupplung zum Anfahren aus dem ersten Getriebegang genutzt und die Mobilitätssicherheit erhöht werden.

Die Lastschaltkupplungen können auch unterschiedlich für verschiedene Anfahrvorgänge ausgelegt werden und/oder einzeln oder gemeinsam zum Anfahren aus einem höheren Getriebegang genutzt werden. Die Lastschaltkupplungen werden vorteilhaft abhängig von zumindest einem Betriebsparameter einzeln oder gemeinsam zum Anfahren genutzt, beispielsweise abhängig von einer an den Lastschaltkupplungen erfaßten Belastung, Reibung, Temperatur und/oder Verschleiß usw.

In einer vorteilhaften Ausgestaltung für einen breiten Anwendungsbereich ist eine Zahnradebene dem dritten und vierten Getriebegang zugeordnet und ein auf der Zwischenwelle gelagertes Zahnrad der Zahnradebene ist mit der ersten und der zweiten Lastschaltkupplung in Wirkverbindung bringbar. Bei der Ausgestaltung ist vorteilhaft eine Abtriebswelle dem ersten, dem zweiten, dem vierten und dem sechsten Getriebegang und die andere Abtriebswelle dem dritten, dem vierten und dem fünften Getriebegang sowie dem Rückwärtsgetriebegang zugeordnet, wobei eine Zahnradebene für den vierten und sechsten Getriebegang und eine Zahnradebene für den Rückwärtsgetriebegang und den zweiten Getriebegang jeweils ein Zahnrad auf der einen Zwischenwelle und eine Zahnradebene für den dritten und vierten Getriebegang, eine Zahnradebene für den ersten Getriebegang und eine Zahnradebene für den fünften Getriebegang jeweils ein Zahnrad auf der anderen Zwischenwelle aufweisen.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: eine schematische Darstellung eines Zahnräderwechselgetriebes, bei dem zwei Abtriebswellen unterschiedliche Achsenabstände zu zwei Zwischenwellen aufweisen,
- Fig. 2: eine Variante nach Fig. 1 mit vier Zahnradebenen,
- Fig. 3: eine schematische Darstellung eines Zahnräderwechselgetriebes, bei dem zwei Zwischenwellen über Schaltelemente verbindbar sind,
- Fig. 4: eine schematische Seitenansicht des Zahnräderwechselgetriebes nach Fig. 1 und
- Fig. 5: eine schematische Seitenansicht einer Variante nach Fig. 1.

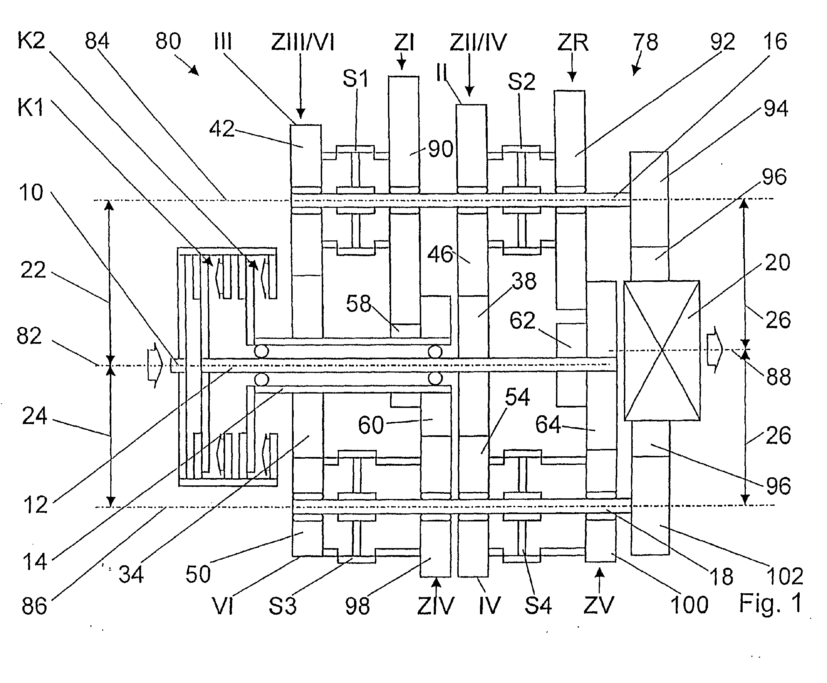

Fig. 1 zeigt ein Zahnräderwechselgetriebe, bei dem eine Eingangswelle 10 mit einem Differentialgetriebe 20 durch ein erstes und ein zweites Teilgetriebe 78, 80 verbunden ist, die im Kraftfluß parallel zueinander angeordnet sind. Jedes Teilgetriebe 78, 80 besitzt eine reibschlüssige Lastschaltkupplung K1, K2 und eine Zwischenwelle 12, 14, die zueinander konzentrisch und koaxial zur Eingangswelle 10 angeordnet sind, wobei jeweils die Zwischenwelle 12, 14 über die Lastschaltkupplung K1, K2 mit der Eingangswelle 10 wirkungsmäßig verbindbar ist. Auf jeder Zwischenwelle 12, 14 sind jeweils drei Festräder 34, 58, 60, 38, 62, 64 gelagert.

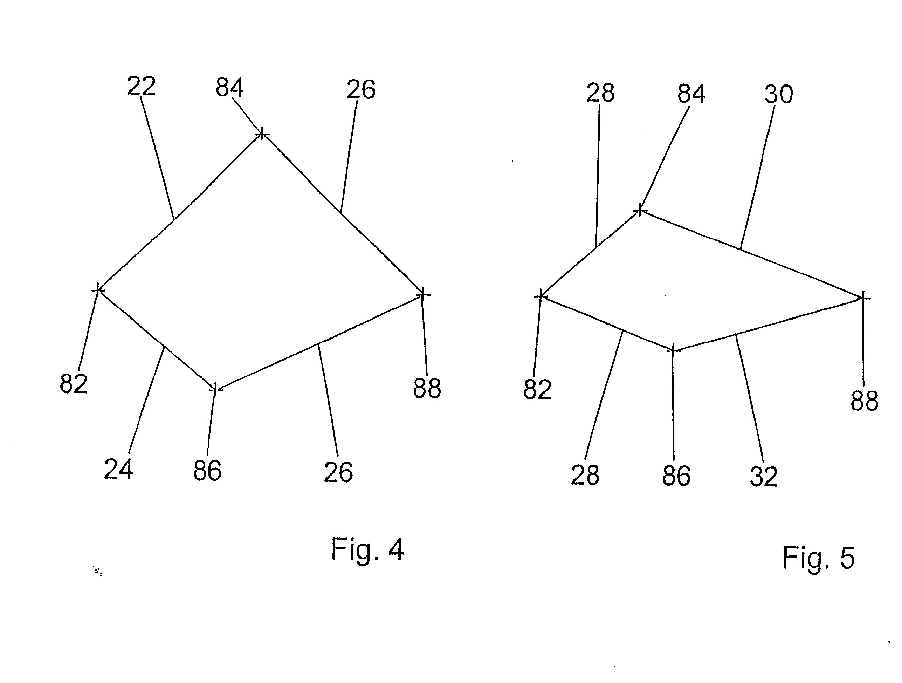

Erfindungsgemäß ist neben einer parallel zu den Zwischenwellen 12, 14 angeordneten ersten Abtriebswelle 16 parallel eine zweite Abtriebswelle 18 angeordnet. Die zweite Abtriebswelle 18 besitzt ausgehend von ihrer Mittelachse 86 einen Achsenabstand 24 zur Mittelachse 82 der Eingangswelle 10 und der Zwischenwellen 12, 14, der kleiner ist als ein Achsenabstand 22 ausgehend von einer Mittelachse 84 der ersten Abtriebswelle 16 zur Mittelachse 82 (Fig. 1 und 4). In Fig. 4 sind die Mittelachsen 82, 84, 86 und die Achsenabstände 22, 24 in einer Seitenansicht schematisch dargestellt. Die Mittelachsen 84, 86 der Abtriebswellen 16, 18 besitzen einen gleichen Achsenabstand 26 zu einer Mittelachse 88 des Differentialgetriebes 20.

Das Festrad 34 auf der Zwischenwelle 14 kämmt sowohl mit einem auf der ersten Abtriebswelle 16 konzentrisch und drehbar gelagerten Losrad 42 als auch mit einem auf der zweiten Abtriebswelle 18 konzentrisch und drehbar gelagerten Losrad 50. Ferner kämmt das Festrad 38 auf der Zwischenwelle 12 sowohl mit einem auf der ersten Abtriebswelle 16 konzentrisch und drehbar gelagerten Losrad 46 als auch mit einem auf der zweiten Abtriebswelle 18 konzentrisch und drehbar gelagerten Losrad 54. Durch die unterschiedlichen Achsenabstände 22, 24 kann eine Zahnradebene ZIII/VI mit dem Festrad 34 und den Losrädern 42, 50 und eine Zahnradebene ZII/IV mit dem Festrad 38 und den Losrädern 46, 54 jeweils zwei Getriebegängen III, VI, II, IV zugeordnet werden.

In einem Ausführungsbeispiel in Fig. 5 ist das Zahnräderwechselgetriebe aus Fig. 1 mit veränderten Achsenabständen 28, 30, 32 dargestellt. Die Abtriebswellen 16, 18 besitzen ausgehend von ihren Mittelachsen 84, 86 einen gleichen Achsenabstand 28 zur Mittelachse 82 der Eingangswelle 10 und der Zwischenwellen 12, 14 und unterschiedliche Achsenabstände 30, 32 zur Mittelachse 88 des Differentialgetriebes 20. Die Achsenabstände 30, 32 sind so gewählt, daß sich wie beim Ausführungsbeispiel in Fig. 1 in der Zahnradebene ZII/IV ein Stufensprung vom zweiten in den vierten Getriebegang II-IV ergibt, der einem Stufensprung vom dritten in den sechsten Getriebegang III-VI entspricht, dem die Zahnradebene ZIII/VI zugeordnet ist. Neben den dargestellten Ausführungsbeispielen sind weitere verschiedene, dem Fachmann als sinnvoll erscheinende Ausführungsformen denkbar, beispielsweise auch Ausführungsformen, bei denen die Abtriebswellen 16, 18 zur Mittelachse 82 der Eingangswelle 10 und der Zwischenwellen 12, 14 und zur Mittelachse 88 des Differentialgetriebes 20 unterschiedliche Achsenabstände aufweisen.

Auf der Abtriebswelle 16 sind neben dem Losrad 42 weitere drei konzentrisch und drehbar gelagerte Losräder 90, 46, 92 und ein konzentrisch und drehfest gelagertes Festrad 94 angeordnet. Das Losrad 42 kämmt in der Zahnradebene ZIII/VI mit dem auf der Zwischenwelle 14 gelagerten Festrad 34 und ist dem dritten Getriebegang III zugeordnet. Das Losrad 90 kämmt in einer Zahnradebene ZI mit dem auf der Zwischenwelle 14 gelagerten Festrad 58 und ist dem ersten Getriebegang I zugeordnet. Zwischen den Losrädern 42, 90 ist eine Zahnradkupplung S1 angeordnet, die im dritten Getriebegang III das Losrad 42 und im ersten Getriebegang I das Losrad 90 mit der Abtriebswelle 16 kuppelt.

Das Losrad 46 kämmt in der Zahnradebene ZII/IV mit dem auf der Zwischenwelle 12 gelagerten Festrad 38 und ist dem zweiten Getriebegang II zugeordnet. Das dem Rückwärtsgetriebegang R zugeordnete Losrad 92 kämmt in einer Zahnradebene ZR mit einem nicht näher dargestellten Zahnrad zur Drehsinnumkehr, das wiederum mit dem Festrad 62 auf der Zwischenwelle 12 kämmt. Zwischen den Losrädern 46, 92 ist eine Zahnradkupplung S2 angeordnet, die im zweiten Getriebegang II das Losrad 46 und im Rückwärtsgetriebegang R das Losrad 92 mit der Abtriebswelle 16 kuppelt.

Das Festrad 94 treibt direkt mit einer festen Übersetzung auf ein Zahnrad 96 des Differentialgetriebes 20 ab. Der erste und der zweite Getriebegang I, II sind auf der Abtriebswelle 16 angeordnet. Beim Gangwechsel vom ersten in den zweiten Getriebegang I-II wird stets über die Abtriebswelle 16 abgetrieben. Ein Wechsel der Abtriebswellen 16, 18 wird vermieden und es kann ein hoher Schaltkomfort erreicht werden.

Neben dem Losrad 50 sind auf der Abtriebswelle 18 drei weitere konzentrisch und drehbar gelagerte Losräder 98, 54, 100 und ein konzentrisch und drehfest gelagertes Festrad 102 angeordnet. Das Losrad 50 kämmt in der Zahnradebene ZIII/VI mit dem auf der Zwischenwelle 14 gelagerten Festrad 34 und ist dem sechsten Getriebegang VI zugeordnet. Das Losrad 98 kämmt in einer Zahnradebene ZIV mit dem auf der Zwischenwelle 14 gelagerten Festrad 60 und ist dem vierten Getriebegang IV zugeordnet. Zwischen den Losrädern 50, 98 ist eine Zahnradkupplung S3 angeordnet, die im sechsten Getriebegang VI das Losrad 50 und im vierten Getriebegang IV das Losrad 98 mit der Abtriebswelle 18 kuppelt.

Das Losrad 54 kämmt in der Zahnradebene ZII/IV mit dem auf der Zwischenwelle 12 gelagerten Festrad 38 und ist dem vierten Getriebegang IV zugeordnet. Das Losrad 100 kämmt in einer Zahnradebene ZV mit dem auf der Zwischenwelle 12 gelagerten Festrad 64 und ist dem fünften Getriebegang V zugeordnet. Zwischen den Losrädern 54, 100 ist eine Zahnradkupplung S4 angeordnet, die im vierten Getriebegang IV das Losrad 54 und im fünften Getriebegang V das Losrad 100 mit der Abtriebswelle 18 kuppelt. Das Festrad 102 treibt direkt mit einer festen Übersetzung auf ein Zahnrad 96 des Differentialgetriebes 20 ab.

Vom ersten Getriebegang I bis zum vierten Getriebegang IV kann ohne weiteres ersichtlich sequentiell mittels einer Überschneidungssteuerung der beiden Lastschaltkupplungen K1, K2 unter Last hochgeschaltet werden. Unter einer Überschneidungssteuerung soll stets eine Steuerung der Übertragungsfähigkeit beider Lastschaltkupplungen K1, K2 verstanden werden, bei der die Summe der Übertragungsfähigkeiten etwa konstant gehalten wird und die Übertragungsfähigkeit der auszurückenden Lastschaltkupplung gegen Null geht.

Nach einem Hochschalten vom dritten in den vierten Getriebegang III-IV verläuft im vierten Getriebegang IV der Kraftfluß von der Eingangswelle 10 über die erste Lastschaltkupplung K1, die Zwischenwelle 12, das Festrad 38, das Losrad 54, die Zahnradkupplung S4, die Abtriebswelle 18 und über das Festrad 102 zum Differentialgetriebe 20. Zum Hochschalten vom vierten in den fünften Getriebegang IV-V wird das Losrad 98 der Zahnradebene ZIV durch die Zahnradkupplung S3 mit der Abtriebswelle 18 gekuppelt. Durch eine Überschneidungssteuerung von der ersten Lastschaltkupplung K1 auf die zweite Lastschaltkupplung K2 wird vom vierten Getriebegang IV in der Zahnradebene ZII/IV in den vierten Getriebegang IV in der Zahnradebene ZIV unter Last geschaltet. Der Kraftfluß verläuft dann von der Eingangswelle 10 über die zweite Lastschaltkupplung K2, die Zwischenwelle 14, das Festrad 60, das Losrad 98, die Zahnradkupplung S3, die Abtriebswelle 18 und über das Festrad 102 zum Differentialgetriebe 20.

Vom vierten Getriebegang IV in der Zahnradebene ZIV kann ohne weiteres ersichtlich durch eine Überschneidungssteuerung der Lastschaltkupplungen K1, K2 sequentiell in den fünften und vom fünften in den sechsten Getriebegang VI unter Last geschaltet werden. Vom sechsten Getriebegang VI bis zum ersten Getriebegang I kann entsprechend dem sequentiellen Hochschalten unter Last sequentiell zurückgeschaltet werden.

Vom zweiten Getriebegang II kann unter Last durch eine Überschneidungssteuerung der ersten Lastschaltkupplung K1 zur zweiten Lastschaltkupplung K2 in den vierten Getriebegang IV in der Zahnradebene ZIV geschaltet werden und entsprechend kann vom vierten Getriebegang IV in den zweiten Getriebegang II unter Last zurückgeschaltet werden. Ferner sind Doppelhochschaltungen und Doppelrückschaltungen durch eine Überschneidungssteuerung der Lastschaltkupplungen K1, K2 zwischen dem dritten und dem fünften Getriebegang III-V und zwischen dem vierten Getriebegang IV in der Zahnradebene ZII/IV und dem sechsten Getriebegang VI unter Last möglich. Bei dem Zahnräderwechselgetriebe können sämtliche Getriebegänge I-VI unter Last durch eine Überschneidungssteuerung sequentiell geschaltet werden. Ferner können die wichtigsten Doppelhochschaltungen und Doppelrückschaltungen, die insbesondere vor und nach einem Überholvorgang benötigt werden, durch eine Überschneidungssteuerung der Lastschaltkupplungen K1, K2 unter Last durchgeführt werden.

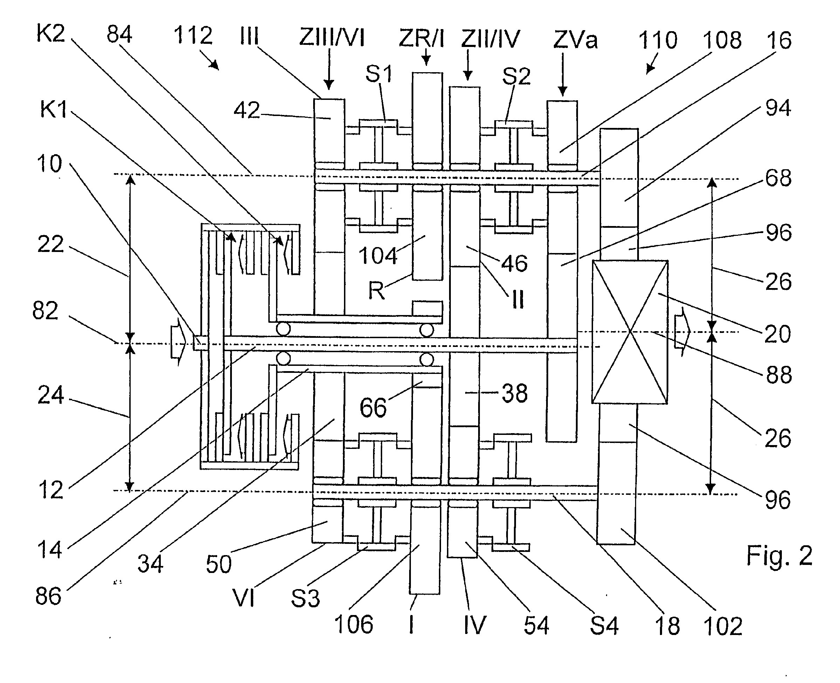

In Fig. 2 ist eine Variante nach Fig. 1 dargestellt, bei dem die Eingangswelle 10 mit dem Differentialgetriebe 20 durch ein erstes und ein zweites Teilgetriebe 110, 112 verbunden ist, die im Kraftfluß parallel zueinander angeordnet sind. Im wesentlichen gleichbleibende Bauteile sind grundsätzlich mit den gleichen Bezugszeichen beziffert. Nachfolgend werden die Besonderheiten des Ausführungsbeispiels in Fig. 2 im Vergleich zu dem Ausführungsbeispiel in Fig. 1 näher beschrieben. Bezüglich gleichbleibender Details und Funktionen kann auf die Beschreibung zum Ausführungsbeispiel in Fig. 1 verwiesen werden.

Das Zahnräderwechselgetriebe besitzt auf jeder Zwischenwelle 12, 14 jeweils nur zwei konzentrisch und drehfest gelagerte Festräder 34, 66, 38, 68. Anstatt den Zahnradebenen ZI, ZIV, ZR, ZV des Ausführungsbeispiels in Fig. 1 besitzt das Zahnräderwechselgetriebe in Fig. 2 neben den Zahnradebenen ZIII/VI und ZII/IV die Zahnradebene ZR/I und ZVa und damit zwei Zahnradebenen weniger als das Zahnräderwechselgetriebe in Fig. 1. Das Zahnräderwechselgetriebe in Fig. 2 kann dadurch besonders kurz, leicht und kostengünstig ausgeführt werden.

In der Zahnradebene ZR/I, die zwischen den Zahnradebenen ZIII/VI und ZII/IV angeordnet ist, kämmt das auf der Zwischenwelle 14 gelagerte Festrad 66 mit einem nicht näher dargestellten Zahnrad zur Drehsinnumkehr, das wiederum mit einem konzentrisch und drehbar auf der Abtriebswelle 16 gelagerten Losrad 104 kämmt. Das Losrad 104 ist dem Rückwärtsgetriebegang R zugeordnet und ist mit der Abtriebswelle 16 durch die Zahnradkupplung S1 kuppelbar. Ferner kämmt das Festrad 66 in der Zahnradebene ZR/I mit einem auf der Abtriebswelle 18 konzentrisch und drehbar gelagerten Losrad 106. Das dem ersten Getriebegang I zugeordnete Losrad 106 ist durch die Zahnradkupplung S3 mit der Abtriebswelle 18 kuppelbar.

In der Zahnradebene ZVa, die zwischen der Zahnradebene ZII/IV und den Festrädern 94, 102 angeordneten ist, kämmt das auf der Zwischenwelle 12 gelagerte Festrad 68 mit einem auf der Abtriebswelle 16 konzentrisch und drehbar gelagerten Losrad 108. Das dem fünften Getriebegang V zugeordnete Losrad 108 ist durch die Zahnradkupplung S2 mit der Abtriebswelle 16 kuppelbar.

Vom ersten bis zum vierten Getriebegang I-IV kann ohne weiteres ersichtlich sequentiell mittels einer Überschneidungssteuerung der beiden Lastschaltkupplungen K1, K2 unter Last hochgeschaltet werden. Vom vierten in den fünften Getriebegang IV-V kann entweder mit Lastunterbrechung oder vorteilhaft durch Zwischenschaltung des sechsten Getriebegangs VI über die Lastschaltkupplung K2 zur Erzeugung eines Füllmoments ebenfalls unter Last geschaltet werden. Der Gangwechsel vom fünften Getriebegang V in den sechsten Getriebegang VI ist wiederum durch eine Überschneidungssteuerung der Lastschaltkupplungen K1, K2 durchführbar. Entsprechend dem sequentiellen Hochschalten vom ersten in den sechsten Getriebegang I-VI kann sequentiell unter Last vom sechsten in den ersten Getriebegang VI-I zurückgeschaltet werden.

Besonders vorteilhaft können bei dem Zahnräderwechselgetriebe mit nur vier Zahnradebenen ZIII/VI, ZR/I, ZII/IV, ZVa die Doppelhochschaltungen und Doppelrückschaltungen zwischen dem dritten und dem fünften Getriebegang III-V und zwischen dem vierten und dem sechsten Getriebegang IV-VI unter Last durch eine Überschneidungssteuerung der Lastschaltkupplungen K1, K2 durchgeführt werden. Insbesondere vor einem Überholvorgang kann besonders schnell, unter Last, ohne Zwischenschaltung eines Getriebegangs und/oder eines Füllmoments vom fünften in den dritten Getriebegang V-III oder vom sechsten in den vierten Getriebegang VI-IV zurückgeschaltet werden.

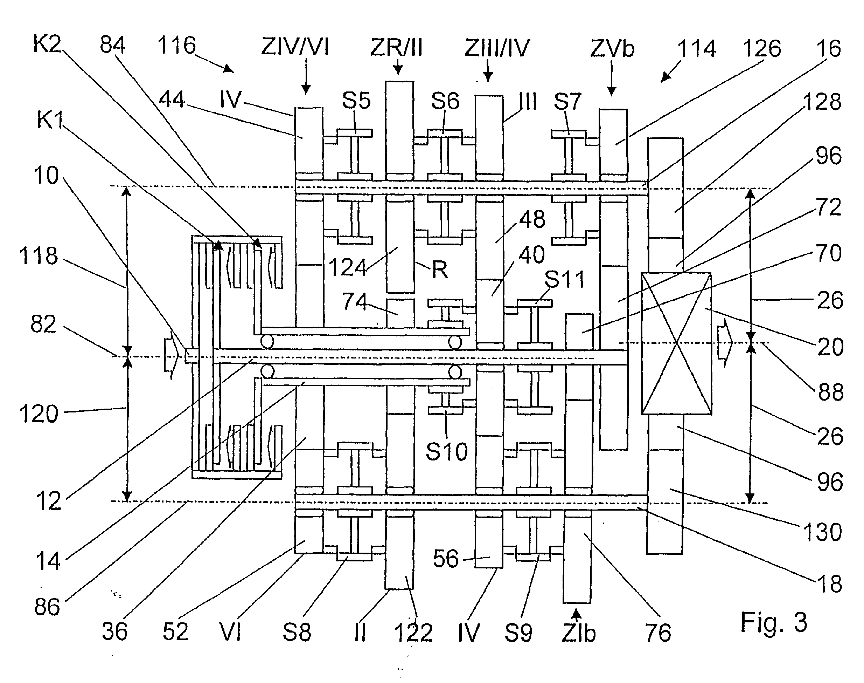

Fig. 3 zeigt eine Variante nach Fig. 1, bei der die Eingangswelle 10 durch ein erstes und ein zweites Teilgetriebe 114, 116 mit dem Differentialgetriebe 20 verbunden ist, die im Kraftfluß parallel zueinander angeordnet sind. Im wesentlichen gleichbleibende Bauteile sind wiederum mit den gleichen Bezugszeichen beziffert. Nachfolgend werden die Besonderheiten des Ausführungsbeispiels in Fig. 3 im Vergleich zu dem Ausführungsbeispiel in Fig. 1 näher beschrieben. Bezüglich gleichbleibender Details und Funktionen kann auf die Beschreibung zum Ausführungsbeispiel in Fig. 1 verwiesen werden.

Auf der Zwischenwelle 14 sind zwei Festräder 36, 74 konzentrisch und drehfest und auf der Zwischenwelle 12 sind ein Losrad 40 konzentrisch und drehbar und zwei Festräder 70, 72 konzentrisch und drehfest gelagert.

Die zweite Abtriebswelle 18 besitzt ausgehend von ihrer Mittelachse 86 einen Achsenabstand 120 zur Mittelachse 82 der Eingangswelle 10 und der Zwischenwellen 12, 14, der kleiner ist als ein Achsenabstand 118 ausgehend von der Mittelachse 84 der ersten Abtriebswelle 16 zur Mittelachse 82.
Das Festrad 36 auf der Zwischenwelle 14 kämmt sowohl mit einem auf der ersten Abtriebswelle 16 konzentrisch und drehbar gelagerten Losrad 44 als auch mit einem auf der zweiten Abtriebswelle 18 konzentrisch und drehbar gelagerten Losrad 52. Das Losrad 74 kämmt mit einem auf der Abtriebswelle 18 konzentrisch und drehbar gelagerten Losrad 122 und mit einem nicht näher dargestellten Zahnrad zur Drehsinnumkehr, das wiederum mit einem auf der Abtriebswelle 16 konzentrisch und drehbar gelagerten Losrad 124 kämmt. Ferner kämmt das Losrad 40 auf der Zwischenwelle 12 sowohl mit einem auf der ersten Abtriebswelle 16 konzentrisch und drehbar gelagerten Losrad 48 als auch mit einem auf der zweiten Abtriebswelle 18 konzentrisch und drehbar gelagerten Losrad 56. Durch die unterschiedlichen Achsenabstände 118, 120 kann eine Zahnradebene ZIV/VI mit dem Festrad 36 und den Losrädern 44, 52, eine Zahnradebene ZR/II mit dem Festrad 74 und den Losrädern 122, 124 und eine Zahnradebene ZIII/IV mit den Losrädern 40, 48, 56 jeweils zwei Getriebegängen IV, VI, R, II, III, IV zugeordnet werden.

Die Achsenabstände 118, 120 sind so gewählt, daß sich in der Zahnradebene ZIII/IV ein Stufensprung vom dritten in den vierten Getriebegang III-IV ergibt, der einem Stufensprung vom vierten in den sechsten Getriebegang IV-VI entspricht, dem die Zahnradebene ZIV/VI zugeordnet ist.

Auf der Abtriebswelle 16 sind neben dem Losrad 44 weitere drei konzentrisch und drehbar gelagerte Losräder 124, 48, 126 und ein konzentrisch und drehfest gelagertes Festrad 128 angeordnet. Das in der Zahnradebene ZIV/VI angeordnete Losrad 44 ist dem vierten Getriebegang IV zugeordnet und ist mit einer Zahnradkupplung S5 mit der Abtriebswelle 16 kuppelbar.

Das in der Zahnradebene ZR/II angeordnete Losrad 124 ist dem Rückwärtsgetriebegang R zugeordnet und das in der Zahnradebene ZIII/IV angeordnete Losrad 48 ist dem dritten Getriebegang III zugeordnet. Zwischen den Losrädern 124 und 48 ist eine Zahnradkupplung S6 angeordnet, die im Rückwärtsgetriebegang R das Losrad 124 und im dritten Getriebegang III das Losrad 48 mit der Abtriebswelle 16 kuppelt.

Das Losrad 126 kämmt in einer Zahnradebene ZVb mit dem Festrad 72 auf der Zwischenwelle 12, ist dem fünften Getriebegang V zugeordnet und ist mit einer Zahnradkupplung S7 mit der Abtriebswelle 16 kuppelbar. Das Festrad 128 treibt direkt mit einer festen Übersetzung auf das Zahnrad 96 des Differentialgetriebes 20 ab.

Neben dem Losrad 52 sind auf der Abtriebswelle 18 drei weitere konzentrisch und drehbar gelagerte Losräder 122, 56, 76 und ein konzentrisch und drehfest gelagertes Festrad 130 angeordnet.

Das in der Zahnradebene ZIV/VI angeordnete Losrad 52 ist dem sechsten Getriebegang VI zugeordnet. Das in der Zahnradebene ZR/II angeordnete Losrad 122 ist dem zweiten Getriebegang II zugeordnet. Zwischen den Losrädern 52, 122 ist eine Zahnradkupplung S8 angeordnet, die im sechsten Getriebegang VI das Losrad 52 und im zweiten Getriebegang II das Losrad 122 mit der Abtriebswelle 18 kuppelt.

Das in der Zahnradebene ZIII/IV angeordnete Losrad 56 ist dem vierten Getriebegang IV zugeordnet. Das Losrad 76 kämmt in einer Zahnradebene ZIb mit dem auf der Zwischenwelle 12 gelagerten Festrad 70 und ist dem ersten Getriebegang I zugeordnet. Zwischen den Losrädern 56, 76 ist eine Zahnradkupplung S9 angeordnet, die im vierten Getriebegang IV das Losrad 56 und im ersten Getriebegang I das Losrad 76 mit der Abtriebswelle 18 kuppelt. Das Festrad 130 treibt direkt mit einer festen Übersetzung auf das Zahnrad 96 des Differentialgetriebes 20 ab.

Der erste und der zweite Getriebegang I, II sind auf der Abtriebswelle 18 angeordnet. Beim Gangwechsel vom ersten in den zweiten Getriebegang I-II wird stets über die Abtriebswelle 18 abgetrieben. Ein Wechsel der Abtriebswellen 16, 18 wird vermieden und es kann ein hoher Schaltkomfort erreicht werden.

Erfindungsgemäß können im Ausführungsbeispiel in Fig. 3 zusätzlich zu den Ausführungsbeispielen in den Fig. 1 und 2 die Zahnräder 36, 74, 40, 70, 72 auf den Zwischenwellen 12, 14 mit der ersten und der zweiten Lastschaltkupplung K1, K2 in Wirkverbindung gebracht werden.

Das in der Zahnradebene ZIII/IV auf der Zwischenwelle 12 gelagerte Losrad 40 kann mit einer Zahnradkupplung S10 mit der Zwischenwelle 14 gekuppelt und mit der Lastschaltkupplung K2 in Wirkverbindung gebracht werden. Ferner kann das Losrad 40 mit einer Zahnradkupplung S11 mit der Zwischenwelle 12 gekuppelt und mit der Lastschaltkupplung K1 in Wirkverbindung gebracht werden. Über das dem dritten Getriebegang III zugeordnete Losrad 48 und über das dem vierten Getriebegang IV zugeordnete Losrad 56 kann jeweils sowohl mit geschlossener Lastschaltkupplung K1 als auch mit geschlossener Lastschaltkupplung K2 abgetrieben werden. Es kann sequentiell vom ersten zum sechsten Getriebegang I-VI durch eine Überschneidungssteuerung der Lastschaltkupplungen K1, K2 unter Last hochgeschaltet und sequentiell durch eine Überschneidungssteuerung der Lastschaltkupplungen K1, K2 unter Last zurückgeschaltet werden.

Bei einem Schaltvorgang auf oder aus einem dritten oder vierten Getriebegang III, IV wird stets der dritte bzw. vierte Getriebegang gewählt auf den bzw. aus dem durch eine Überschneidungssteuerung der Lastschaltkupplungen K1, K2 unter Last geschaltet werden kann. Es können sämtliche Doppelhoch- und Doppelrückschaltungen I-III, II-IV, III-V, IV-VI durch eine Überschneidungssteuerung der Lastschaltkupplungen K1, K2 unter Last durchgeführt werden.

Über die Zahnradkupplungen S10, S11 können die Zwischenwellen 12, 14 miteinander in Wirkverbindung gebracht werden, und zwar indem die Zahnradkupplung S10 das Losrad 40 mit der zwischenwelle 14 und die Zahnradkupplung S11 das Losrad 40 mit der zwischenwelle 12 kuppelt. Es kann über die erste Lastschaltkupplung K1, die Zwischenwelle 12, die Zahnradkupplung S11, das Losrad 40, die Zahnradkupplung S10 auf die Zwischenwelle 14 und über die Festräder 74 und 36 abgetrieben werden. Ferner kann über die zweite Lastschaltkupplung K2, über die Zwischenwelle 14, die Zahnradkupplung S10, das Losrad 40, die Zahnradkupplung S11 auf die Zwischenwelle 12 und über die Festräder 70, 72 abgetrieben werden. Insbesondere kann dadurch mit der ersten Lastschaltkupplung K1, mit der zweiten Lastschaltkupplung K2 oder mit beiden Lastschaltkupplungen K1, K2 gemeinsam aus dem ersten Getriebegang I und auch aus dem zweiten Getriebegang II angefahren werden. Anstatt mit zwei Zahnradkupplungen S10, S11 können die Zwischenwellen 12, 14 auch grundsätzlich mit einem Schaltelement miteinander in Wirkverbindung gebracht werden.

Beim Anfahren aus dem ersten Getriebegang I mit beiden Lastschaltkupplungen K1, K2 sind beide Lastschaltkupplungen K1, K2 geschlossen. Die Zahnradkupplung S10 kuppelt das Losrad 40 mit der Zwischenwelle 14 und die Zahnradkupplung S11 kuppelt das Losrad 40 mit der Zwischenwelle 12. Ferner kuppelt die Zahnradkupplung S9 das Losrad 76 mit der Abtriebswelle 18. Der Kraftfluß verläuft von der Eingangswelle 10 über die erste Lastschaltkupplung K1, die Zwischenwelle 12, das Festrad 70, das Losrad 76, die Zahnradkupplung S9, die Abtriebswelle 18 und über das Festrad 130 zum Differentialgetriebe 20 und von der Eingangswelle 10 über die zweite Lastschaltkupplung K2, die Zwischenwelle 14, die Zahnradkupplung S10, das Losrad 40, die Zahnradkupplung S11, die Zwischenwelle 12, das Festrad 70, das Losrad 76, die Zahnradkupplung S9, die Abtriebswelle 18 und über das Festrad 130 zum Differentialgetriebe 20. Sinkt die Differenzdrehzahl in den Lastschaltkupplungen K1, K2 auf Null, wird die Lastschaltkupplung K2 geöffnet.

Wird allein mit der zweiten Lastschaltkupplung K2 aus dem ersten Getriebegang I angefahren, kann durch Übergabe an die Lastschaltkupplung K1 ohne Zugkraftunterbrechung oder direkt mit Zugkraftunterbrechung in den zweiten Getriebegang II geschaltet werden. In entsprechender Weise kann aus dem zweiten Getriebegang II angefahren werden.

### Bezugszeichen

| | | | |
|---|---|---|---|
| K1 | Lastschaltkupplung | S8 | Schaltelement |
| K2 | Lastschaltkupplung | S9 | Schaltelement |
| ZIII/VI | Zahnradebene | S10 | Schaltelement |
| ZI | Zahnradebene | S11 | Schaltelement |
| ZIV | Zahnradebene | I | Getriebegang |
| ZII/IV | Zahnradebene | in | Getriebegang |
| ZR | Zahnradebene | III | Getriebegang |
| ZV | Zahnradebene | IV | Getriebegang |
| ZR/I | Zahnradebene | V | Getriebegang |
| ZVa | zahnradebene | VI | Getriebegang |
| ZIV/VI | Zahnradebene | R | Rückwärtsgetriebegang |
| ZR/II | Zahnradebene | 10 | Eingangswelle |
| ZIII/IV | Zahnradebene | 12 | Zwischenwelle |
| ZIb | Zahnradebene | 14 | Zwischenwelle |
| ZVb | Zahnradebene | 16 | Abtriebswelle |
| S1 | Schaltelement | 18 | Abtriebswelle |
| S2 | Schaltelement | 20 | Differentialgetriebe |
| S3 | Schaltelement | 22 | Achsenabstand |
| S4 | Schaltelement | 24 | Achsenabstand |
| S5 | Schaltelement | 26 | Achsenabstand |
| S6 | Schaltelement | 28 | Achsenabstand |
| S7 | Schaltelement | 30 | Achsenabstand |
| 32 | Achsenabstand | 92 | Zahnrad |
| 34 | Zahnrad | 94 | Zahnrad |
| 36 | Zahnrad | 96 | Zahnrad |
| 38 | Zahnrad | 98 | Zahnrad |
| 40 | Zahnrad | 100 | Zahnrad |
| 42 | Zahnrad | 102 | Zahnrad |
| 44 | Zahnrad | 104 | Zahnrad |
| 46 | Zahnrad | 106 | Zahnrad |
| 48 | Zahnrad | 108 | Zahnrad |
| 50 | Zahnrad | 110 | Teilgetriebe |
| 52 | Zahnrad | 112 | Teilgetriebe |
| 54 | Zahnrad | 114 | Teilgetriebe |
| 56 | Zahnrad | 116 | Teilgetriebe |
| 58 | Zahnrad | 118 | Achsenabstand |
| 60 | Zahnrad | 120 | Achsenabstand |
| 62 | Zahnrad | 122 | Zahnrad |
| 64 | Zahnrad | 124 | Zahnrad |
| 66 | Zahnrad | 126 | Zahnrad |
| 68 | Zahnrad | 128 | Zahnrad |
| 70 | Zahnrad | 130 | Zahnrad |
| 72 | Zahnrad | | |
| 74 | Zahnrad | | |
| 76 | Zahnrad | | |
| 78 | Teilgetriebe | | |
| 80 | Teilgetriebe | | |
| 82 | Mittelachse | | |
| 84 | Mittelachse | | |
| 86 | Mittelachse | | |
| 88 | Mittelachse | | |
| 90 | Zahnrad | | |

## Patentansprüche

1. Zahnräderwechselgetriebe, bei dem eine Eingangswelle (10) mit einem Differentialgetriebe (20) durch ein erstes und ein zweites Teilgetriebe (78, 80, 110, 112, 114, 116) verbunden ist, die im Kraftfluß parallel zueinander angeordnet sind und je eine reibschlüssige Lastschaltkupplung (K1, K2) und je eine Zwischenwelle (12, 14) aufweisen, die zueinander konzentrisch und koaxial zur Eingangswelle (10) angeordnet sind, wobei jeweils die Zwischenwelle (12, 14) über die Lastschaltkupplung (K1, K2) mit der Eingangswelle (10) wirkungsmäßig verbindbar ist, und mit zumindest einem Zahnrad (34, 58, 62, 64, 66, 38, 68, 36, 74, 40, 70, 72) je Zwischenwelle (12, 14), von denen zumindest eine mit einer parallel zu den Zwischenwellen (12, 14) angeordneten ersten Abtriebswelle (16 bzw. 18) wirkungsmäßig verbindbar ist, die direkt oder indirekt auf das Differentialgetriebe (20) abtreibt, wobei parallel zur ersten Abtriebswelle (16) zumindest eine zweite Abtriebswelle (18) angeordnet ist, die zu den Zwischenwellen (12, 14) und/oder zu dem Differentialgetriebe (20) einen von der ersten Abtriebswelle (16) abweichenden Achsenabstand (22, 24, 30, 32, 118, 120) aufweist, und zumindest ein Zahnrad (34, 36, 38, 40) wenigstens einer Zwischenwelle (12, 14) sowohl mit einem Zahnrad (42, 44, 46, 48) auf der ersten Abtriebswelle (16) als auch mit einem Zahnrad (50, 52, 54, 56) auf der zweiten Abtriebswelle (18) kämmt, wobei der erste und der zweite Getriebegang (I, II) auf einer gemeinsamen Abtriebswelle (16, 18) angeordnet sind
**dadurch gekennzeichnet,**
**dass** das am Entferntesten von der Lastschaltkupplung (K1, K2) angeordnete Zahnrad (64, 68, 72) der Zwischenwellen (12,14) in einer Zahnradebene (ZV, ZVa, ZVb) angeordnet ist, die dem fünften Getriebegang (V) zugeordnet ist.

2. Zahnräderwechselgetriebe nach Anspruch 1,
**dadurch gekennzeichnet,**
**daß** zumindest ein Zahnrad (34, 36, 38, 40) je zwischenwelle (12, 14) sowohl mit einem Zahnrad (42, 44, 46, 48) auf der ersten Abtriebswelle (16) als auch mit einem Zahnrad (50, 52, 54, 56) auf der zweiten Abtriebswelle (18) kämmt.

3. Zahnräderwechselgetriebe nach einem der vorhergehenden An sprüche,
**dadurch gekennzeichnet,**
**daß** eine Zahnradebene (ZII/IV) dem zweiten und vierten Getriebegang (II, IV) und eine zahnradebene (ZIII/VI) dem dritten und sechsten Getriebegang (III, VI) zugeordnet ist.

4. Zahnräderwechselgetriebe nach Anspruch 3,
**dadurch gekennzeichnet,**
**daß** eine Abtriebswelle (18) dem vierten, dem fünften und dem sechsten Getriebegang (IV, V, VI) und eine Abtriebswelle (16) dem ersten, dem zweiten und dem dritten Getriebegang (I, II, III) sowie dem Rückwärtsgetriebegang (R) zugeordnet ist, wobei die Zahnradebene (ZIII/VI) für den dritten und sechsten Getriebegang (III, VI), eine Zahnradebene (ZI) für den ersten Getriebegang (I) und eine Zahnradebene (ZIV) für den vierten Getriebegang (IV) jeweils ein Zahnrad (34, 58, 60) auf der einen Zwischenwelle (14) und die Zahnradebene (ZII/IV) für den zweiten und vierten Getriebegang (II, IV), eine Zahnradebene (ZV) für den fünften Getriebegang (V) und eine Zahnradebene (ZR) für den Rückwärtsgetriebegang (R) jeweils ein Zahnrad (38, 62, 64) auf der anderen Zwischenwelle (12) aufweisen.

5. Zahnräderwechselgetriebe nach Anspruch 3,
**dadurch gekennzeichnet,**
**daß** auf jeder Zwischenwelle (12, 14) höchstens zwei Zahnräder (34, 66, 38, 68) gelagert sind.

6. Zahnräderwechselgetriebe, nach Anspruch 5,
**dadurch gekennzeichnet,**
**daß** eine Abtriebswelle (16) dem zweiten, dem dritten, dem fünften Getriebegang (II, III, V) und dem Rückwärtsgetriebegang (R) und eine Abtriebswelle (18) dem ersten, dem vierten und dem sechsten Getriebegang (I, IV, VI) zugeordnet ist, wobei die Zahnradebene (ZIII/VI) für den dritten und sechsten Getriebegang (III, VI) und eine zahnradebene (ZR/I) für den Rückwärtsgetriebegang (R) und den ersten Getriebegang (I) jeweils ein Zahnrad (34, 66) auf der einen Zwischenwelle (14) und die Zahnradebene (ZII/IV) für den zweiten und vierten Getriebegang (II, IV) und eine Zahnradebene (Zva) für den fünften Getriebegang (V) jeweils ein Zahnrad (38, 68) auf der anderen Zwischenwelle (12) aufweisen.

7. Zahnräderwechselgetriebe nach einem der vorhergehenden Ansprüche,
**dadurch gekennzeichnet,**
**daß** zumindest ein Zahnrad (36, 74, 40, 70, 72) auf wenigstens einer Zwischenwelle (12, 14) mit der ersten und der zweiten Lastschaltkupplung (K1, K2) in Wirkverbindung bringbar ist.

8. Zahnräderwechselgetriebe nach Anspruch 7,
**dadurch gekennzeichnet,**
**daß** eine Zwischenwelle (12) über ein oder mehrere Schaltelemente (S10, S11) mit der anderen Zwischenwelle (14) in Wirkverbindung bringbar ist.

9. Zahnräderwechselgetriebe nach Anspruch 8,
**dadurch gekennzeichnet,**
**daß** zumindest das dem ersten Getriebegang (I) zugeordnete zahnrad (70) mit der ersten und der zweiten Lastschaltkupplung (K1, K2) in Wirkverbindung bringbar ist.

10. Zahnräderwechselgetriebe nach Anspruch 9,
**dadurch gekennzeichnet,**
**daß** die erste Lastschaltkupplung (K1) und die zweite Lastschaltkupplung (K2) wahlweise einzeln oder gemeinsam zum Anfahren aus dem ersten Getriebegang (I) nutzbar sind.

11. Zahnräderwechselgetriebe nach einem der Ansprüche 1 bis 6 und nach einem der Ansprüche 7 bis 10,
**dadurch gekennzeichnet,**
**daß** eine Zahnradebene (ZIII/IV) dem dritten und dem vierten Getriebegang (III, IV) zugeordnet ist und ein auf der zwischenwelle (12) gelagertes Zahnrad (40) der Zahnradebene (ZIII/IV) mit der ersten und der zweiten Lastschaltkupplung (K1, K2) in Wirkverbindung bringbar ist.

12. Zahnräderwechselgetriebe nach Anspruch 11,
**dadurch gekennzeichnet,**
**daß** eine Abtriebswelle (18) dem ersten, dem zweiten, dem vierten und dem sechsten Getriebegang (I, II, IV, VI) und die andere Abtriebswelle (16) dem dritten, dem vierten und dem fünften Getriebegang (III, IV, V) sowie dem Rückwärtsgetriebegang (R) zugeordnet ist, wobei eine Zahnradebene (ZIV/VI) für den vierten und sechsten Getriebegang (IV, VI) und eine Zahnradebene (ZR/II) für den Rückwärtsgetriebegang (R) und den zweiten Getriebegang (II) jeweils ein Zahnrad (36, 74) auf der einen Zwischenwelle (14) und die Zahnradebene (ZIII/IV) für den dritten und vierten Getriebegang (III, IV), eine Zahnradebene (ZIb) für den ersten Getriebegang (I) und eine Zahnradebene (ZVb) für den fünften Getriebegang (V) jeweils ein Zahnrad (40, 70, 72) auf der anderen Zwischenwelle (12) aufweisen.

## Claims

1. Toothed-wheel change-speed transmission, in which an input shaft (10) is connected to a differential gear unit (20) by a first and a second part-transmission (78, 80, 110, 112, 114, 116) arranged in the force flow parallel to one another, each comprising a frictional change-under-load clutch (K1, K2) and in each case an intermediate shaft (12, 14), these being arranged concentrically with one another and coaxially with the input shaft (10), such that the intermediate shafts (12, 14) can be brought into active connection with the input shaft (10) by the change-under-load clutches (K1, K2), respectively, and with at least one gearwheel (34, 58, 62, 64, 66, 38, 68, 36, 74, 40, 70, 72) of each intermediate shaft (12, 14), at least one of which can be brought into active connection with a first drive output shaft (16 or 18) arranged parallel to the intermediate shafts (12, 14), whose drive output passes directly or indirectly to the differential gear unit (20), at least one second drive output shaft (18) being arranged parallel to the first drive output shaft (16), whose axial distance (22, 24, 30, 32, 118, 120) away from the intermediate shafts (12, 14) and/or the differential gear unit (20) is different from the first drive output shaft (16), and at least one gearwheel (34, 36, 38, 40) meshes both with a gearwheel (42, 44, 46, 48) on the first drive output shaft (16) and with a gearwheel (50, 52, 54, 56) on the second drive output shaft (18), such that the first and the second transmission gear (I, II) are arranged on a common drive output shaft (16, 18),
**characterised in that**
the gearwheel (64, 68, 72) of the intermediate shafts (12, 14) positioned farthest away from the change-under-load clutch (K1, K2) in arranged in a gearwheel plane (ZV, ZVa, ZVb) which is associated with the fifth transmission gear (V).

2. Toothed-wheel change-speed transmission according to Claim 1,
**characterised in that**
at least one gearwheel (34, 36, 38, 40) of each intermediate shaft (12, 14) meshes both with a gearwheel (42, 44, 46, 48) on the first drive output shaft (16) and with a gearwheel (50, 52, 54, 56) on the second drive output shaft (18).

3. Toothed-wheel change-speed transmission according to either of the preceding claims,
**characterised in that**
one gearwheel plane (ZII/IV) is associated with the second and fourth transmission gears (II, IV) and one gearwheel plane (ZII/VI) with the third and sixth transmission gears (III, VI).

4. Toothed-wheel change-speed transmission according to Claim 3,
**characterised in that**
one drive output shaft (18) is associated with the fourth, fifth and sixth transmission gears (IV, V, VI) and one drive output shaft (16) is associated with the first, second and third transmission gears (I, II, III) and with the reverse gear (R), such that the gearwheel plane (ZII/VI) for the third and sixth gears (III, VI), a gearwheel plane (ZI) for the first gear (I) and a gearwheel plane ZIV) for the fourth gear (IV) have in each case a gearwheel (34, 58, 60) on one intermediate shaft (14) and the gearwheel plane (ZII/IV) for the second and fourth gears (II, IV), a gearwheel plane (ZV) for the fifth gear (V) and a gearwheel plane (ZR) for the reverse gear (R) have in each case a gearwheel (38, 62, 64) on the other intermediate shaft (12).

5. Toothed-wheel change-speed transmission according to Claim 3,
**characterised in that**
at most two gearwheels (34, 66, 38, 68) are mounted on each of the intermediate shafts (12, 14).

6. Toothed-wheel change-speed transmission according to Claim 5,
**characterised in that**
one drive output shaft (16) is associated with the second, third and fifth transmission gears (II, III, V) and with the reverse gear (R), and one drive output shaft (18) is associated with the first, fourth and sixth gear (I, IV, VI), such that the gearwheel plane (ZII/VI) for the third and sixth gears (III, VI), and a gearwheel plane (ZR/I) for the reverse gear (R) and the first gear (I) have in each case a gearwheel (34, 66) on one intermediate shaft (14) and the gearwheel plane (ZII/IV) for the second and fourth gears (II, IV) and a gearwheel plane (Zva) for the fifth gear have in each case a gearwheel (38, 68) on the other intermediate shaft (12).

7. Toothed-wheel change-speed transmission according to any of the preceding
claims,
**characterised in that**
at least one gearwheel (36, 74, 40, 70, 72) on at least one intermediate shaft (12, 14) can be brought into active connection with the first and the second change-under-load clutch (K1, K2).

8. Toothed-wheel change-speed transmission according to Claim 7,
**characterised in that**
one intermediate shaft (12) can be brought into active connection with the other intermediate shaft (14) by means of one or more shift elements (S10, S11).

9. Toothed-wheel change-speed transmission according to Claim 8,
**characterised in that**
at least the gearwheel (70) associated with the first gear (I) can be brought into active connection with the first and the second change-under-load clutch (K1, K2).

10. Toothed-wheel change-speed transmission according to Claim 9,
**characterised in that**
to start driving from the first gear (I), the first change-under-load clutch (K1) and the second change-under-load clutch (K2) can optionally be used individually or together.

11. Toothed-wheel change-speed transmission according to according to any of Claims 1 to 6 and any of Claims 7 to 10,
**characterised in that**
a gearwheel plane (ZIII/IV) is associated with the third and fourth transmission gears (III, IV) and a gearwheel (40) of the said gearwheel plane (ZIII/IV) mounted on the intermediate shaft (12) can be brought into active connection with the first and the second change-under-load clutch (K1, K2).

12. Toothed-wheel change-speed transmission according to according to Claim 11,
**characterised in that**
one drive output shaft (18) is associated with the first, second, fourth and sixth transmission gears (I, II, IV, VI) and the other drive output shaft is associated with the third, fourth and fifth gears and with the reverse gear (R), such that one gearwheel plane (ZIV/VI) for the fourth and sixth gears (IV, VI) and one gearwheel plane (ZR/II) for the reverse gear (R) and for the second gear (II) have in each case a gearwheel (36, 74) on one intermediate shaft (14) and the gearwheel plane (ZIII/IV) for the third and fourth gears (III, IV), a gearwheel plane (Zlb) for the first gear (I) and a gearwheel plane (ZVb) for the fifth gear (V) have in each case a gearwheel (40, 70, 72) on the other intermediate shaft (12).

## Revendications

1. Boîte à pignons interchangeables dans laquelle un arbre (10) d'entrée est raccordé à un engrenage différentiel (20) par un premier et un deuxième engrenage partiel (78, 80, 110, 0, 112, 114, 116), qui sont placés parallèlement l'un à l'autre dans la chaîne cinématique et présentent chacun un embrayage couplable sous charge (K1, K2) à friction et un arbre intermédiaire (12, 14) qui sont disposés de manière concentrique l'un par rapport à l'autre et de manière coaxiale par rapport à l'arbre (10) d'entrée, chaque arbre intermédiaire (12, 14) pouvant être relié de manière efficace à l'arbre d'entrée (10) par le biais de l'embrayage (K1, K2) couplable sous charge et à au moins un pignon (34, 58, 62, 64, 66, 38, 68, 36, 74, 40, 70, 72) par arbre intermédiaire (12, 14), dont au moins un peut être relié de manière efficace à un premier arbre (16 et / ou 18) de sortie disposé parallèlement aux arbres intermédiaires (12, 14), qui entraîne directement ou indirectement l'engrenage différentiel (20), au moins un second arbre (18) de sortie étant disposé parallèlement au premier arbre (16) de sortie, qui présente par rapport aux arbres intermédiaires (12, 14) et / ou par rapport à l'engrenage différentiel (20) une distance axiale (22, 24, 30, 32, 118, 120) différente du premier arbre (16) de sortie, et au moins un pignon (34, 36, 38, 40) d'au moins un arbre intermédiaire (12, 14) s'engrène non seulement avec un pignon (42, 44, 46, 48) sur le premier arbre de sortie (16) de sortie mais aussi avec un pignon (50, 52, 54, 56) sur le second arbre (18) de sortie, la première et la deuxième vitesse (I, II) sont disposées sur un arbre de sortie (16, 18) commun, **caractérisée en ce que** le pignon (64, 68, 72) le plus éloigné de l'embrayage (K1, K2) couplable sous charge des arbres intermédiaires (12, 14) est disposé dans un plan de pignons (ZV, Zva, ZVb), qui est associée à la cinquième vitesse (V).

2. Boîte à pignons interchangeables selon la revendication 1, **caractérisée en ce qu'**au moins un pignon (34, 36, 38, 40) de chaque arbre intermédiaire (12, 14) s'engrène non seulement avec un pignon (42, 44, 46, 48) sur le premier arbre de sortie (16) de sortie mais aussi avec un pignon (50, 52. 54, 56) sur le second arbre de sortie.

3. Boîte à pignons interchangeables selon l'une quelconque des revendications précédentes, **caractérisée en ce qu'**un plan de pignons (ZII/IV) est associé à la seconde et la quatrième vitesses (II, IV) et un plan de pignons (ZII/VI) est associé à la troisième et la sixième vitesses (III, VI).

4. Boîte à pignons interchangeables selon la revendication 3, **caractérisée en ce qu'**un arbre (18) de sortie est associé à la quatrième, la cinquième et la sixième vitesses (IV, V, VI) et un arbre (16) de sortie est associé à la première, la seconde et la troisième vitesses (I, II, III) ainsi qu'à la marche arrière (R), le plan de pignons (ZIII/VI) pour la troisième et la sixième vitesses (III, VI), un plan de pignons (ZI) pour la première vitesse (I) et un plan de pignons (ZIV) pour la quatrième vitesse (IV) présentent d'une part un pignon (34, 58, 60) respectivement sur un arbre intermédiaire (14) et le plan de pignon (ZII/IV) pour la deuxième et la quatrième vitesses (II, VI), un plan de pignons (ZV) pour la cinquième vitesse (V) et un plan de pignons (ZR) pour la marche à arrière (R) présentent respectivement un pignon (38, 62, 64) sur l'autre arbre (12) intermédiaire.

5. Boîte à pignons interchangeables selon la revendication 3, **caractérisée en ce que** deux pignons (34, 66, 38, 68) maximum sont montés sur chaque arbre intermédiaire (12, 14).

6. Boîte à pignons interchangeables selon la revendication 5, **caractérisée en ce qu'**un arbre (16) de sortie est associé à la deuxième, la troisième, la cinquième vitesses (II, III, V) et à la marche arrière (R) et un arbre (18) de sortie est associé à la première, la quatrième et la sixième vitesses (I, IV, VI), le plan de pignons (ZIII/VI) pour la troisième et la sixième vitesses (III, VI) et un plan de pignons (ZR/I) pour la marche arrière (R) et la première vitesse (I) présentent d'une part un pignon (34, 66) respectivement sur l'arbre intermédiaire (14) et le plan de pignon (ZII/IV) pour la deuxième et la quatrième vitesses (II, VI) et un plan de pignons (Zva) pour la cinquième vitesse (V) présentent d'autre part respectivement un pignon (38, 68) sur l'autre arbre (12) intermédiaire.

7. Boîte à pignons interchangeables selon l'une quelconque des revendications précédentes, **caractérisée en ce qu'**au moins un pignon (36, 74, 40, 70, 72) sur au moins un arbre (12, 14) intermédiaire peut être mis en liaison fonctionnelle avec le premier et le second embrayage couplable sous charge (K1, K2).

8. Boîte à pignons interchangeables selon la revendication 7, **caractérisée en ce qu'**un arbre (12) intermédiaire peut être mis en liaison fonctionnelle avec l'autre arbre (14) intermédiaire par le biais d'un ou plusieurs éléments de changement de vitesse (S10, S11).

9. Boîte à pignons interchangeables selon la revendication 8, **caractérisée en ce qu'**au moins le pignon (70) associé à la première vitesse (I) peut être mis en liaison fonctionnelle avec le premier ou le second embrayage (K1, K2) couplable sous charge.

10. Boîte à pignons interchangeables selon la revendication 9, **caractérisée en ce que** le premier embrayage (K1) couplable sous charge et le second embrayage (K2) couplable sous charge peuvent être utilisés au choix individuellement ou ensemble pour le démarrage en première vitesse (I).

11. Boîte à pignons interchangeables selon l'une quelconque des revendications 1 à 6 et selon l'une quelconque des revendications 7 à 10, **caractérisée en ce qu'**un plan de pignons (ZIII, IV) est associé à la troisième et la quatrième vitesses (III, IV) et un pignon (40) monté sur l'arbre intermédiaire (12) du plan de pignons (ZIII, IV) peut être mis en liaison fonctionnelle avec le premier et le second embrayage couplable sous charge (K1, K2).

12. Boîte à pignons interchangeables selon la revendication 11, **caractérisée en ce qu'**un arbre (18) de sortie est associé à la première, la seconde , la quatrième et la sixième vitesses (I, II, IV, VI) et l'autre arbre (16) de sortie est associé à la troisième, la quatrième et la cinquième vitesses (III, IV, V) ainsi qu'à la marche arrière (R), un plans de pignons (ZIV/ VI) pour la quatrième et la sixième vitesses (IV, VI) et un plan de pignons (ZR/II) pour la marche arrière (R) et la deuxième vitesse (II) présentent respectivement un pignon d'une part sur un arbre (14) intermédiaire et le plan de pignons (ZIII/IV) pour la troisième et la quatrième vitesses (III, IV), un plan de pignons (Zlb) pour la première vitesse (I) et un plan de pignons (ZVb) pour la cinquième vitesse présentent respectivement un pignon (40, 70, 72) sur l'autre arbre (12) intermédiaire.
